(19)

Europäisches
Patentamt
European
Patent Office
Office européen
des brevets

(11) **EP 3 608 695 A1**

(12) **EUROPEAN PATENT APPLICATION**

(43) Date of publication:
**12.02.2020   Bulletin 2020/07**

(21) Application number: **18275114.9**

(22) Date of filing: **10.08.2018**

(51) Int Cl.:
*G02B 1/00* (2006.01)          *G02B 5/20* (2006.01)
*G02B 5/26* (2006.01)          *G02B 5/28* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **BAE SYSTEMS plc
London SW1Y 5AD (GB)**

(72) Inventor: **The designation of the inventor has not
yet been filed**

(74) Representative: **BAE SYSTEMS plc
Group IP Department
Farnborough Aerospace Centre
Farnborough
Hampshire GU14 6YU (GB)**

(54) **COATING  MATERIAL**

(57)     A coating material (10) for coating an article is described. The coating material (10) comprises a surface (100) having an optical interference coating (110) thereon. The coating material (10) improves protection of the article from incident electromagnetic radiation having a predetermined wavelength. The coating material (10) may retroreflect at least some of the incident electromagnetic radiation, for example towards a source (e.g. a laser) thereof. An article having a coating provided by such a coating material and methods of providing such coating materials are also described.

**Fig. 1**

## Description

### Field

The present invention relates to coating materials. Particularly, the present invention relates to optical interference coating materials.

### Background to the invention

Coherent electromagnetic radiation sources, for example lasers, laser lights or laser pointers, particularly infra red (IR) lasers, laser lights or laser pointers, may be used maliciously as hostile light to damage assets (also known as articles or devices), for example sensors, control systems, weapons or vehicles. The damage may include disabling or impairing operation, reducing integrity and/or destruction thereof, thereby increasing risk to hostile threats. The damage may be temporary or permanent. The damage may also include harm to humans, for example pilots or drivers, associated with the assets. The harm may include distraction, dazzle, flash blindness and/or physiological or physical damage.

Hence, there is a need to improve protection of assets from hostile light.

### Summary of the Invention

It is one aim of the present invention, amongst others, to provide a coating material which at least partially obviates or mitigates at least some of the disadvantages of the prior art, whether identified herein or elsewhere. For instance, it is an aim of embodiments of the invention to provide a coating material that improves protection of assets from hostile light. For instance, it is an aim of embodiments of the invention to provide a coating material that blocks and/or disrupts incident laser energy. For instance, it is an aim of embodiments of the invention to provide a coating material that retroreflects at least some of the incident electromagnetic radiation, towards a source (e.g. a laser) thereof.

A first aspect provides a coating material for coating an article, the coating material comprising a surface having an optical interference coating thereon.

A second aspect provides an article having a coating provided by a coating material according to the first aspect.

A third aspect provides a method of providing a coating material, comprising:

applying a layer of a polymeric composition comprising a polymer on a particle;
floating the particle on a liquid, preferably mercury; and
irradiating the particle with a laser beam, thereby providing an optical interference coating on the particle.

A fourth aspect provides a method of providing a coating material, comprising:

providing a film having an optical interference coating thereon on a surface thereof; and
indenting the film, thereby providing a metamaterial.

### Detailed Description of the Invention

According to the present invention there is provided a coating material, as set forth in the appended claims. Also provided is an article having a coating provided by such a coating material and methods of providing such a coating material. Other features of the invention will be apparent from the dependent claims, and the description that follows.

The first aspect provides a coating material for coating an article, the coating material comprising a surface having an optical interference coating thereon.

In this way, in use, the coating material improves protection of the article, coated with the coating material, from incident electromagnetic radiation, particularly incident infra red electromagnetic radiation, having a predetermined wavelength, for example by attenuating the incident electromagnetic radiation having the predetermined wavelength incident on the article c.f. incident on the coating material. In this way, the coating material blocks and/or disrupts incident laser energy, for example. That is, the coating material reduces damage of the article due to the incident electromagnetic radiation, thereby maintaining operation, preserving integrity and/or preventing destruction thereof, thereby increasing resistance to hostile threats.

In other words, the coating material wavelength-selectively reduces energy absorbed by the article, thereby extending life of the article. In addition, the coating material may retroreflect at least some of the incident electromagnetic radiation, towards a source (e.g. a laser) thereof, thereby potentially compromising, such as damaging, the source or its associated sensors, which may comprise a weapon and/or a sensor.

### *Holographic interference coating*

In one example, the optical interference coating comprises and/or is a holographic interference coating (also known as a holographic iridescent film or a holographic interference grating). Holographic interference coatings are known in the art. Generally, a recording medium for the holographic interference coating may comprise a polymeric composition comprising a polymer, for example a photographic emulsion, a dichromated gel, a photoresist, a photothermoplastic, a photopolymer, a photoreactive material (also known as a photosensitive material) and/or a mixture thereof.

### *Notch filter*

In one example, the optical interference coating comprises and/or is a filter assembly comprising a first notch filter arranged to attenuate transmission therethrough of electromagnetic radiation having a first wavelength incident normally thereupon.

That is, the first notch filter may reduce transmission therethrough of the electromagnetic radiation having the first wavelength incident normally thereupon. Since the first notch filter is included in the coating material on the article, a reduced intensity of the electromagnetic radiation having the first wavelength incident normally thereupon may be incident on the article thereunder, thereby reducing damage thereto.

In one example, the first wavelength is in a range from 100 nm to 2000 nm, preferably in a range from 380 nm to 760 nm for example 445 nm, 532 nm or 650 nm (i.e. visible light) and/or in a range from 700 nm to 1100 nm (i.e. infra red), for example in a range from 760 nm to 1000 nm. Preferably, the first wavelength is in a range from 700 nm to 1100 nm (i.e. infra red), more preferably in a range from 760 nm to 1000 nm.

Typically, laser pointers are sources of electromagnetic radiation having predetermined wavelengths of 445 nm, 532 nm or 650 nm. Some diode sources are sources of electromagnetic radiation having predetermined wavelengths in a range from 1500 nm to 1600 nm. Chemical lasers, such as deuterium fluoride lasers including Mid-Infrared Advanced Chemical Laser, (MIRACL) and Tactical High-Energy Laser (THEL), and AN/SEQ-3 Laser Weapon System (XN-1 LaWS) may be used as directed-energy weapons.

In one example, the first notch filter has a first optical density of at least 1, preferably at least 2, more preferably at least 3. That is, the first notch filter attenuates electromagnetic radiation having the first wavelength incident normally thereupon to at most 10%, at most 1% and at most 0.1% of the incident power, respectively.

In one example, the first notch filter has a bandwidth in a range from 1 nm to 50 nm, preferably in a range from 2 nm to 20 nm, more preferably in a range from 5 nm to 10 nm.

In one example, the first notch filter is arranged to attenuate electromagnetic radiation having a first wavelength range including the first wavelength. That is, the first notch filter reduces transmission therethrough of electromagnetic radiation having a range of wavelengths including the first wavelength, for example a bandwidth around and/or including the first wavelength.

In one example, the first wavelength range is at most 30 nm, preferably at most 20 nm, more preferably at most 10 nm.

In one example, the first notch filter is arranged on the surface at a first oblique angle thereto, whereby, in use, the first notch filter is at an oblique angle to the incident electromagnetic radiation having the predetermined wavelength.

In contrast with conventional coating materials, the first notch filter of the coating material of the first aspect specularly reflects incident electromagnetic radiation, for example, at an angle away from the source, thereby reducing retro-reflection. This deliberate reflection may reduce damage to the article and/or retro-reflection disclosing the article's location, for example.

Particularly, the first notch filter is arranged to reflect a narrow bandwidth of incident electromagnetic radiation. The first notch filter may be arranged to have a fixed red shift of the bandwidth, compared to normal incidence, to compensate for a blue shift due to tilting by the first oblique angle.

As described above, in use, the incident electromagnetic radiation having the predetermined wavelength is thus reflected by the first notch filter away therefrom, wherein the first wavelength and the predetermined wavelength are different. Particularly, while the first notch filter is arranged to attenuate transmission of electromagnetic radiation having the first wavelength incident normally thereupon, by including the first notch filter in the coating material on the surface at the first oblique angle, the first notch filter reflects the incident electromagnetic radiation having the predetermined wavelength transmitted due, at least in part, to red shift or blue shift, for example.

Expressing the first oblique angle $\theta$ in radians, the wavelength of attenuation, for example blocking, is blue shifted according to Equation 1:

$$\lambda(\theta) = \lambda(0) \sqrt{1 - \left(\frac{\sin(\theta)}{n_{eff}}\right)^2}$$

where $n_{eff}$ is the effective refractive index and $\lambda(0)$ is the first wavelength, incident normally to the first notch filter.

The first notch filter may be arranged at the first oblique angle $\theta$ to the optical axis. Therefore, the nominal wavelength needs to be red shifted by a value $\lambda(0) - \lambda(\theta)$ so as to counter the blue shift determined according to Equation 1.

Table 1 shows red shifts calculated from Equation 1 as a function of $\theta$ for $\lambda(0) = 532$ nm and $n_{eff} = 1.5$.

Table 1: red shifts calculated from Equation 1 as a function of $\theta$ for $\lambda(0) = 532$ nm and $n_{eff} = 1.5$.

| $\theta$ | Red shift (nm) |
|---|---|
| -80° | 130.7 |
| -70° | 117.3 |
| -60° | 97.6 |
| -50° | 74.6 |
| -40° | 51.3 |
| -30° | 30.4 |
| -20° | 14.0 |

(continued)

| θ | Red shift (nm) |
|---|---|
| -10° | 3.6 |
| 0° | 0.0 |
| 10° | 3.6 |
| 20° | 14.0 |
| 30° | 30.4 |
| 40° | 51.3 |
| 50° | 74.6 |
| 60° | 97.6 |
| 70° | 117.3 |
| 80° | 130.7 |

In one example, a difference between the predetermined wavelength and the first wavelength is in a range from 0.1 nm to 150 nm, preferably in a range from 1 nm to 100 nm, more preferably in a range from 10 nm to 50 nm, most preferably in a range from 14 nm to 31 nm. For example, for the most preferred range of 14 nm to 31 nm, reflection of hostile light having the predetermined wavelength is provided for a cone of incidence (i.e. a range of angles of incidence) having a cone angle of approximately 20° to 40°. For some applications, smaller cone angles may be suitable for example in a range from 5° to 30° or less, for example in a range from 5° to 15°.

In one example, the filter assembly comprises a first set of first notch filters, including the first notch filter, arranged to attenuate electromagnetic radiation having respective first wavelengths, including the first wavelength. In this way, detection may be avoided from and/or protection provided from electromagnetic radiation having multiple predetermined wavelengths, for example from lasers having predetermined wavelengths in a range from 700 nm to 1100 nm (i.e. infra red).

In one example, the filter assembly comprises a second notch filter arranged to attenuate electromagnetic radiation having a second wavelength, wherein the first wavelength, the second wavelength and the predetermined wavelength are different. In one example, the filter assembly comprises N notch filters, wherein N is a natural number greater than 1, for example 2, 3, 4, 5, 6 or more, arranged to attenuate electromagnetic radiation having N wavelengths respectively, wherein the N wavelengths and the predetermined wavelength are different In this way, detection may be avoided from and/or protection provided from electromagnetic radiation having multiple predetermined wavelength simultaneously, for example from multiple lasers having predetermined wavelengths in a range from 700 nm to 1100 nm (i.e. infra red),.

*Optical interference coating*

In one example, the coating material comprises a film comprising the surface having the optical interference coating thereon. In one example, the film is the optical interference coating. The film may be applied to the article, for example by adhesion, through application of heat, chemical reaction and/or mechanical coupling.

In one example, the film has a thickness in a range from 1 μm to 100 μm, preferably in a range from 10 μm to 90 μm, more preferable in a range from 20 μm to 80 μm.

*Metamaterials, protrusions and depressions*

In one example, the film comprises a metamaterial, for example a photonic metamaterial (also known as an optical metamaterial). Generally, photonic metamaterials are a type of electromagnetic metamaterial, that interact with electromagnetic radiation, including terahertz (THz), infrared (IR) and visible wavelengths. These photonic metamaterials have periodic, cellular structures, comprising a plurality of cells. Particularly, the cells are on a scale that is magnitudes larger than an atom, yet much smaller than the wavelength of the electromagnetic radiation.

In one example, the surface comprises protrusions, for example columns, and/or depressions, for example cube corners. The protrusions and/or the depressions may be arranged in a matrix (i.e. regularly and/or equispaced)

The inventors have found that reflections from non-flat surfaces (i.e. surfaces having nonplanar surfaces, for example concave or convex surfaces) are dissipated, for example diverged over a large area due to diffuse reflection, due to their curvatures, thereby reducing damage to the article thereunder by reducing the returned power to the sources. Thus, by including the protrusions, for example columns, and/or the depressions, for example cube corners, on or in the surface, respectively, damage to the coated article may be reduced.

In one example, the protrusions have a dimension, for example a width, a diameter and/or a height, in a range from 100 nm to 10 mm, preferably in a range from 1 μm to 1 mm, more preferably in a range from 10 μm to 100 μm. In one example, the depressions have a dimension, for example a width, a diameter and/or a depth, in a range from 100 nm to 10 mm, preferably in a range from 1 μm to 1 mm, more preferably in a range from 10 μm to 100 μm.

In one example, the protrusions comprise pillars, thereby giving rise to an apparent varying-density of the surface. The holographic film may be thus pitted with pillars, thereby causing reflection to occur as the incident electromagnetic radiation is lensed 180 degrees, as described with respect to the particle, such as a bead. Particularly, by varying a 'fill factor' of the pillars, an effective refractive index of the surface may be varied. For example, by varying the fill factor, for example locally, the effective refractive index may be varied such that the surface behaves as a cube corner or a plurality thereof.

In one example, the film comprises a plurality of depressions in a surface thereof, for example formed by impressing or indenting the surface. In one example, the plurality of depressions are arranged in a matrix. A shape of the depressions may be selected such that the depressions act like corner reflectors, for example. By providing the depressions in the film comprising the surface having the optical interference coating thereon, wavelength selectivity of reflection by the film may be improved. Additionally and/or alternatively, protrusions such as pillars may act optically like depressions.

*Flowable formulation*

In one example, the coating material comprises a flowable formulation including the surface having the optical interference coating thereon. In one example, the flowable formulation comprises particles, such as beads, fibres, flakes, platelets and/or chopped film, as described herein. For example, the coating material may be provided as a paint, a lacquer, a varnish or an adhesive that may be applied to the article by brush, by rollering, by spraying and/or by dipping. Such a coating material may be cured, for example by heating and/or by exposure to electromagnetic radiation, and/or dried, for example by evaporation of a solvent. In one example, the flowable formulation, for example after application such as cured or dried, is optically transparent to the incident electromagnetic radiation having the predetermined wavelength. In one example, the flowable formulation, for example after application such as cured or dried, has an optical density of at most 1 (equivalent to 10 % of the initially incident electromagnetic radiation), preferably at most 0.1, more preferably at most 0.01. In this way, the electromagnetic radiation may be transmitted through the flowable formulation, for example after application such as cured or dried. Such a coating material may provide a smooth or substantially smooth outer surface on an article. Such a smooth surface may enhance laminar flow of a fluid thereover. Additionally and/or alternatively, such a coating material may provide a non-smooth, for example a roughened, outer surface on an article. Such a non-smooth surface may induce a boundary turbulent layer in a fluid flowing thereover, thereby reducing drag so as to provide an aerodynamic benefit.

*Particles*

In one example, the coating material comprises particles and wherein the surface having the optical interference coating thereon is provided by at least a first part of surfaces of the particles.

*Antireflective coating*

In one example, an antireflective coating (also known as anti-reflective (AR), anti-reflection (AR) or anti-glare coating) is provided on at least a second part of the surfaces of the particles.

In one example, the antireflective coating is an index-matching coating, a single-layer interference coating, a multi-layer interference coating, an absorbing coating, a moth eye coating or a circular polarizer coating.

Index-matching coatings are the simplest form of anti-reflective coating. For example, a tarnish on a surface of an optical glass replaces an air-glass interface with two interfaces: an air-tarnish interface and a tarnish-glass interface. Since the tarnish has a refractive index between those of glass and air, each of these interfaces exhibits less reflection than the air-glass interface. For example, a graded-index (GRIN) anti-reflective coating has a nearly continuously varying index of refraction, thereby reducing reflection for a broad band of frequencies and incidence angles. Index-matching coatings are cost-effective.

Single-layer interference coatings include a single thin layer of a transparent material having a refractive index equal or approximately equal to the square root of the underlying substrate's refractive index. In air, such a single-layer interference coating theoretically gives a zero or near zero reflectance for electromagnetic radiation having a wavelength, in the coating, equal to four times a thickness of the coating. Reflectance is also decreased for wavelengths in a broad band around the wavelength. Such a coating having a thickness equal to a quarter of a predetermined wavelength may be known as a quarter-wave layer. In this way, the thickness of the layer may be controlled for the predetermined wavelength. For example, crown glass has a refractive index of about 1.52. An optimal single-layer coating would have a refractive index of 1.23. However, coating materials having such a low refractive index are generally unavailable, although mesoporous silica nanoparticles have refractive indices as low as 1.12. Suitable coating materials include magnesium fluoride $MgF_2$, having a refractive index of 1.38, and fluoropolymers, having refractive indices as low as 1.30, but are more difficult to apply). Coated crown glass, having a coating of $MgF_2$, gives a reflectance of about 1%, compared with 4% for uncoated crown glass. $MgF_2$ coatings are cost-effective and may good anti-reflection over the visible band.

Multi-layer interference coatings typically comprise alternating layers of a lower-index material , for example silica, and a higher-index material, and may provide reflectivities as low as 0.1% at a predetermined wavelength. Multi-layer interference coatings that provide very low reflectivities over a broad range of wavelengths may be prepared, though are relatively complex and/or costly.

Absorbing coatings (also known as absorbing ARC) may be advantageous if high transmission through a surface is unimportant or undesirable, but low reflectivity is required. Such absorbing coatings may provide very low reflectance and are cost-effective. Examples include titanium nitride and niobium nitride. Such absorbing coatings may be ablated, at least in part, by the incident electromagnetic radiation and thus multiple layers and/or an increased thickness of the coating may be desirable. Thermally conductive particles may be included in the absorbing coatings and/or thermally conductive layers between layers of the coating, to improve heat dissipation and improve longevity thereof.

Moth eye coatings have protrusions smaller than a predetermined wavelength and are a form of biomimicry. Particularly, surfaces of moths' eyes are covered with a nanostructured film, having a hexagonal pattern of protrusions, each approximately 200 nm high, at 300 nm centres, thereby reducing reflection of visible light. For example, moth eye coatings may be prepared from tungsten oxide and iron oxide, forming tungsten oxide spheroids (-100s $\mu$m diameter) coated with a thin iron-oxide layer (~ few nanometers thickness).

Circular polarizer coatings transmit light having a chirality of circular polarization. Light reflected from the surface of the underlying substrate has the opposed chirality and thus is not transmitted through the coating.

In one example, some or all of the particles are oriented, for example electrostatically and/or magnetically, whereby the antireflective coating is outermost or generally outermost. In this way, retroreflection of at least some of the incident electromagnetic radiation, towards a source (e.g. a laser) thereof, is improved.

*Beads*

In one example, the particles are beads, for example spheroidal or spherical beads. The surface having the optical interference coating thereon is provided by at least the first part of the surfaces of the beads. In other words, the beads are at least partly coated with the optical interference coating, for example a holographic interference coating and/or wherein the optical interference coating comprises and/or is a filter assembly comprising a first notch filter arranged to attenuate transmission therethrough of electromagnetic radiation having a first wavelength incident normally thereupon.

In one example, the beads are formed from a material transparent to the incident electromagnetic radiation having the predetermined wavelength. In one example, the material has an optical density of at most 1 (equivalent to 10 % of the initially incident electromagnetic radiation), preferably at most 0.1, more preferably at most 0.01. In this way, the electromagnetic radiation may be transmitted through the bead. Suitable materials include optical glasses and polymeric materials. Optical glasses include silicate glass, fused quartz glass, soda lime glass, sodium borosilicate glass, lead-oxide glass, aluminosilicate glass, germanium glass and crown glass. Polymeric materials include thermoplastic and/or thermoset polymeric compositions, for example polymethlamethacrylate (PMMA), cellulose acetate butyrate, polycarbonate, glycol modified polyethylene terephthalate, polystyrene (PS), polypropylene (PP), polyethylene (PE), thermoplastic elastomer olefinic (TPO), styrene acrylonitrile (SAN), styrene methyl methacrylate (SMMA), styrene butadiene (SB) copolymer, polyethylene terephthalate (PET), styrene ethylene butylene styrene block copolymer (SEBS), methacrylate butadiene styrene (MBS), polylactic acid (PLA), polyether sulfone (PES) and polysulphone (PSU).

In one example, the beads are completely coated with the optical interference coating, for example a holographic interference coating. In this way, at least some incident electromagnetic radiation reflects off a front surface of a bead while at least some incident electromagnetic radiation is transmitted into the bead (i.e. enters the bead). At least some of the electromagnetic radiation transmitted into the bead is subsequently transmitted out of the bead (i.e. exits the bead). However, at least some of the electromagnetic radiation transmitted into the bead is trapped in the bead, due to the optical interference coating, for example the holographic interference coating. The trapped electromagnetic radiation may ablate at least a part of the optical interference coating, for example the holographic interference coating, and/or the particle, thereby absorbing energy of the trapped electromagnetic radiation and protecting the underlying article. Furthermore, since the at least a part of the optical interference coating may be ablated, access by the electromagnetic radiation to the remainder of the bead is enabled, providing greater retro reflection and trapping less energy than the intact coating. In other words, the bead is sacrificial, being at least partly damaged by the incident electromagnetic radiation, while protecting the article. By providing multiple layers of beads, for example, resistance to the incident electromagnetic radiation may be improved. In addition, the coating material may retroreflect at least some of the incident electromagnetic radiation, towards a source (e.g. a laser) thereof, thereby potentially compromising, such as damaging, the source or its associated sensors, which may comprise a weapon and/or a sensor.

In one example, the beads have a radius in a range from 1 $\mu$m to 10 mm, preferably in a range from 10 $\mu$m to 1 mm, more preferably in a range from 50 $\mu$m to 500 $\mu$m, for example 100 $\mu$m, 200 $\mu$m, 300 $\mu$m or 400 $\mu$m.

In one example, the beads are provided in a flowable formulation, as described above.

The beads may be prepared as described below.

*Fibres*

In one example, the particles include fibres.

The fibres may be generally as described above with respect to the beads, mutatis mutandis.

In one example, the fibres have a radius in a range from 1 μm to 10 mm, preferably in a range from 10 μm to 1 mm, more preferably in a range from 50 μm to 500 μm, for example 100 μm, 200 μm, 300 μm or 400 μm.

In one example, the fibres have a length in a range from 1 μm to 100,000 m, preferably in a range from 1 mm to 10,000 m, more preferably in a range from 1 m to 1000 m.

In one example, the particles include chopped fibres, for example formed by chopping the fibre, as described above.

In one example, the chopped fibres have a length in a range from 1 μm to 10 mm, preferably in a range from 10 μm to 1 mm, more preferably in a range from 50 μm to 500 μm, for example 100 μm, 200 μm, 300 μm or 400 μm.

In one example, the chopped fibres are included in a flowable formulation, as described above. In this way, the chopped fibres may be applied to a surface of an article in the flowable formulation.

In one example, the particles include ground or finely-divided fibres, for example formed by grinding the fibre or the chopped fibres, as described above.

*Flakes, platelets or chopped film*

In one example, the particles are flakes, platelets or chopped film, for example formed by cutting or chopping the film, wherein the film is as described above, for example a film comprising the surface having the optical interference coating thereon.

The flakes, platelets or chopped film may be generally as described above with respect to the fibres, mutatis mutandis.

In one example, the flakes, platelets or chopped film are included in a flowable formulation, as described above. In this way, the flakes, platelets or chopped film may be applied to a surface of an article in the flowable formulation.

For example, a holographic film may be finely chopped into flakes, platelets or chopped film. The flakes, platelets or chopped film may be mixed with optically clear epoxy (i.e. a flowable formulation) and painted on the surface of an article.

*Article*

According to the second aspect, there is provided an article having a coating provided by a coating material according to the first aspect.

In one example, the article comprises and/or is a military article, for example a landcraft such as an armoured and/or armed vehicle (e.g. tank); a watercraft such as a ship (e.g. landing craft or a patrol vessel); an aircraft, such as a combat fixed wing or rotary wing aircraft; an installed or mobile resource such as a communications device (e.g. antenna) or a weapon.

*Method*

According to the third aspect, there is provided a method of providing a coating material, comprising:

applying a layer of a polymeric composition comprising a polymer on a particle;
floating the particle on a reflecting liquid, preferably mercury; and
irradiating the particle, for example the layer of the polymeric composition, with a laser beam, thereby providing an optical interference coating on the particle.

In one example, the method comprises additionally and/or alternatively providing the particle on a reflecting surface, preferably an optical mirror, in addition to and/or instead of floating the particle on the reflecting liquid. In one example, the method comprises rolling, rotating, revolving and/or precessing the particle about 1, 2 or 3 mutually orthogonal axes, for example while irradiating the particle with the laser beam, thereby irradiating non-irradiated portions of the particle, for example the layer of the polymeric composition. In one example, the method comprises changing an angle of incidence of the laser beam, for example by rotation, revolution and/or precession about 1, 2 or 3 mutually orthogonal axes, thereby irradiating non-irradiated portions of the particle, for example the layer of the polymeric composition.

The polymeric composition comprising the polymer, the particle and/or the optical interference coating may be as described with respect to the first aspect. It should be understood that irradiating the particle comprises irradiating the layer of the polymeric composition comprising the polymer thereon. In one example, irradiating the particle comprises irradiating the layer of the polymeric composition comprising the polymer thereon.

In this way, the optical interference coating is provided by holographically exposing the layer of the polymeric composition comprising the polymer, for example a photosensitive film, with a laser beam, for example having a predetermined wavelength having a selected wavelength band of bandwidth 10 nm or less. In other words, the particle, for example a glass bead, is covered in the layer of the polymeric composition comprising the polymer and floated on a pool of mercury, for example. A laser is targeted on the glass bead, and interfering light reflects off the surface of the mercury, etching a holographic interference pattern in the layer, thereby providing the optical interference coating.

In one example, irradiating the particle comprises irradiating the particle with a selected plurality of lasers having a set of predetermined wavelengths within a selected wavelength band of bandwidth 10 nm or less.

Particularly, the liquid is selected such that the liquid has a greater density than the particle. In this way, the particle is positively buoyant in the liquid. For example, the particle floats on a surface of the liquid. Additionally, the liquid is selected such that the liquid reflects the laser beam. Suitable liquids include mercury and metals and/or semi-metals, including alloys, having melting points lower than of the polymeric composition comprising the polymer and/or the particle.

In one example, the layer has a thickness in a range from 1 μm to 100 μm, preferably in a range from 10 μm to 90 μm, more preferable in a range from 20 μm to 80 μm. Thinner, currently known, films may not achieve useful optical densities. Indeed, in respect of currently known photosensitive polymeric films, the degree to which a selected radiation wavelength can be blocked (i.e. the effectiveness of a filter region formed therein) is determined by the thickness and refractive modulation index of the film and, also, by the optical design. Thus, the filter region thickness is ideally matched to the application and the potential power of the source from which protection is required (which may be dictated, at least to some extent, by the minimum distance from the target platform the laser threat may realistically be located and this, in turn, is dictated by application). In general, thicker films and films with higher refractive modulation indices would be selected if it were required to provide protection from higher power radiation sources or to provide greater angular coverage, but this might then have a detrimental effect on the inherent VLT of the film, so a balance is selected to meet the needs of a specific application.

In one example, irradiating the particle comprises exposing the layer to an intersection of two counter propagating laser beams for each of a set of laser wavelengths within the selected wavelength band having a selected spectral bandwidth. Each laser (of a wavelength within the selected spectral bandwidth) produces a laser beam which may be controlled by a shutter. The laser beam may be directed by a mirror into a beam splitter wherein the laser beam is divided into equal beam segments. Each beam segment may pass through a microscope objective and then reflected by a respective mirror onto the layer. Other coating materials (not shown) may be provided between the microscope objective and the mirror to, for example, focus or diverge the respective beam segments, as required. Furthermore, masking or other limiting techniques may be utilised to limit the extent or thickness to which the layer is exposed to the beam segments, as will be understood by a person skilled in the art. As a specific (non limiting) example, if it is required to provide a notch filter region of bandwidth 5 nm around 520 nm, then a plurality of lasers may be used to produce the notch filter region of (by way of example) 517.5 nm, 518 nm, 518.5 nm, 519 nm, 519.5 nm, 520 nm, 520.5 nm, 521 nm, 521.5 nm, 522 nm and 522.5 nm. The above-described exposure process may be performed consecutively for each of these laser wavelengths or, in other exemplary embodiments, the exposures may be performed substantially simultaneously. Other apparatus for forming a holographic filter region at each specified wavelength is known and could, alternatively, be used.

Once the exposure process (i.e. the irradiating) has been completed, the resultant hologram may be fixed by, for example, a bleaching process.

According to the fourth aspect, there is provided a method of providing a coating material, comprising:

providing a film having an optical interference coating thereon on a surface thereof; and
indenting the film, thereby providing a protrusions and/or depressions therein, for example a metamaterial.

The coating material, the film, the protrusions, the depressions and/or the metamaterial may be as described with respect to the first aspect.

In one example, the method comprises optionally indenting the surface, preferably an optically reflective surface, thereby optionally providing a protrusions and/or depressions therein, applying a layer of a polymeric composition comprising a polymer on the indented surface and irradiating the surface, for example the layer of the polymeric composition, with a laser beam, thereby providing an optical interference coating on the indented surface, as described with respect to the third aspect mutatis mutandis. In one example, the method comprises applying a paint, a lacquer, a varnish or an adhesive on to the optical interference coating on the indented surface, for example by brush, by rollering, by spraying and/or by dipping.

Throughout this specification, the term "comprising" or "comprises" means including the component(s) specified but not to the exclusion of the presence of other components. The term "consisting essentially of" or "consists essentially of" means including the components specified but excluding other components except for materials present as impurities, unavoidable materials present as a result of processes used to provide the components, and components added for a purpose other than achieving the technical effect of the invention, such as colourants, and the like.

The term "consisting of" or "consists of" means including the components specified but excluding other components.

Whenever appropriate, depending upon the context, the use of the term "comprises" or "comprising" may also be taken to include the meaning "consists essentially of" or "consisting essentially of", and also may also be taken to include the meaning "consists of" or "consisting of".

The optional features set out herein may be used either individually or in combination with each other where appropriate and particularly in the combinations as set out in the accompanying claims. The optional features for each aspect or exemplary embodiment of the invention, as set out herein are also applicable to all other aspects or exemplary embodiments of the invention, where appropriate. In other words, the skilled person reading this specification should consider the optional features for each aspect or exemplary embodiment of the invention as interchangeable and combinable between different aspects and exemplary embodiments.

## Brief description of the drawings

For a better understanding of the invention, and to show how exemplary embodiments of the same may be brought into effect, reference will be made, by way of example only, to the accompanying diagrammatic Figures, in which:

Figure 1 schematically depicts a coating material according to an exemplary embodiment;

Figure 2 schematically depicts a coating material according to an exemplary embodiment;

Figure 3 schematically depicts a coating material according to an exemplary embodiment;

Figure 4 schematically depicts a method of providing a coating material according to an exemplary embodiment;

Figure 5 schematically depicts a method of providing a coating material according to an exemplary embodiment;

Figure 6 schematically depicts a filter assembly for a coating material according to an exemplary embodiment;

Figure 7 schematically depicts a method of providing a filter assembly for a coating material according to an exemplary embodiment;

Figure 8 schematically depicts transmission characteristics of a filter assembly for a coating material according to an exemplary embodiment; and

Figure 9 schematically depicts transmission characteristics of a filter assembly for a coating material according to an exemplary embodiment.

## Detailed Description of the Drawings

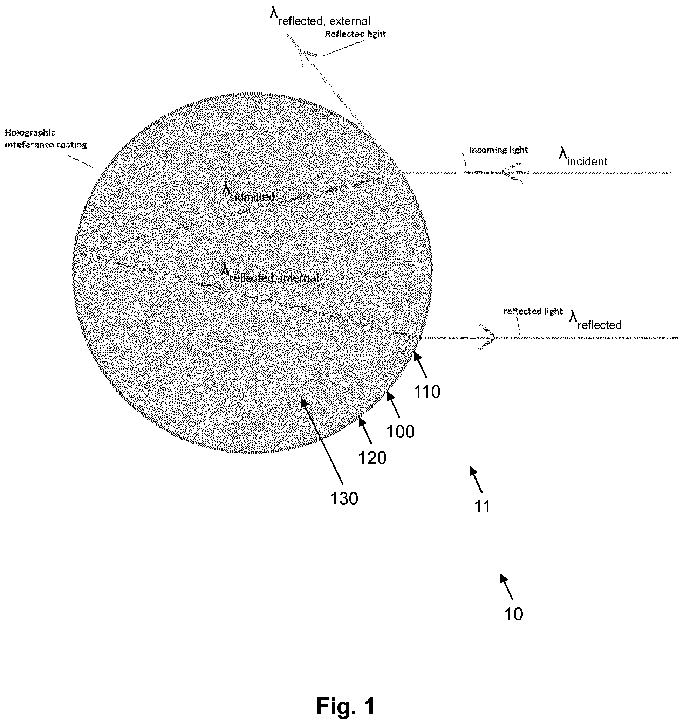

Figure 1 schematically depicts a coating material 10 according to an exemplary embodiment.

In more detail, the coating material 10 is for coating an article. The coating material 10 comprises a surface 100 having an optical interference coating 110 thereon. The coating material 10 comprises a film 120 comprising the surface 100 having the optical interference 110 coating thereon. The coating material comprises a flowable formulation including the surface 100 having the optical interference coating 110 thereon. In use, the flowable formulation cures to a solid. The coating material comprises particles 130 and wherein the surface 100 having the optical interference coating 110 thereon is provided by at least a first part of surfaces of the particles 130.

In this example, the particle 130 is a bead, particularly a spherical bead. In this example, the particle 130 is completely coated with the optical interference coating 110, particularly a holographic interference coating 110, provided as the film 120 on the surface 100 thereof. The particle 130 is formed from optical glass and has a radius of 100 $\mu$m.

In this way, at least some incident electromagnetic radiation $\lambda_{incident}$ reflects off a front surface of a bead 130 (i.e. as reflected electromagnetic radiation $\lambda_{reflected, external}$) while at least some incident electromagnetic radiation $\lambda_{incident}$ is transmitted into the bead 130 (i.e. enters the bead 130 as admitted electromagnetic radiation $\lambda_{admitted}$). At least some of the admitted electromagnetic radiation $\lambda_{admitted}$ transmitted into the bead 130 is subsequently transmitted out of the bead 130 (i.e. exits the bead as transmitted electromagnetic radiation $\lambda_{transmitted}$) (not shown). However, at least some of the electromagnetic radiation $\lambda_{admitted}$ transmitted into the bead 130 is trapped in the bead 130, due to reflection by the optical interference coating, for example the holographic interference coating 110. The trapped electromagnetic radiation $\lambda_{reflected,internal}$ may ablate at least a part of the optical interference coating 110, for example the holographic interference coating, and/or the bead 130, thereby absorbing energy of the trapped electromagnetic radiation and protecting the underlying article. At least some of the trapped electromagnetic radiation $\lambda_{reflected,internal}$ may exit the bead 130 via the front surface i.e. as reflected electromagnetic radiation $\lambda_{reflected}$. Furthermore, since the at least a part of the optical interference coating 110 may be ablated, access by the electromagnetic radiation to the remainder of the bead 130 is enabled, providing greater retro reflection and trapping less energy than the intact coating. In other words, the bead 130 is sacrificial, being at least partly damaged by the incident electromagnetic radiation, while protecting the article. By providing multiple layers of beads 130, for example, resistance to the incident electromagnetic radiation may be improved.

In use, the beads 130 are applied to an article such that a surface of the article is covered in many layers of the beads 130, thereby providing a protective layer. This allows for the destruction and ablation of the protective layer by a laser from a weapon without breach of protection. Protection may be required only for a limited time due to a nature of the weapon only being able to target the article for a specific time. The holographic interference coating 110 may be tuned for a predetermined wavelength or a range of predetermined wavelengths. Since lasers from weapons are generally monochromatic, protection may be thus provided against predetermined weapons. In addition, the coating material may retroreflect at least some of the incident electromagnetic radiation, towards a source (e.g. a laser) thereof, thereby potentially compromising, such as damaging, the source or its associated sensors, which may comprise a weapon and/or a sensor.

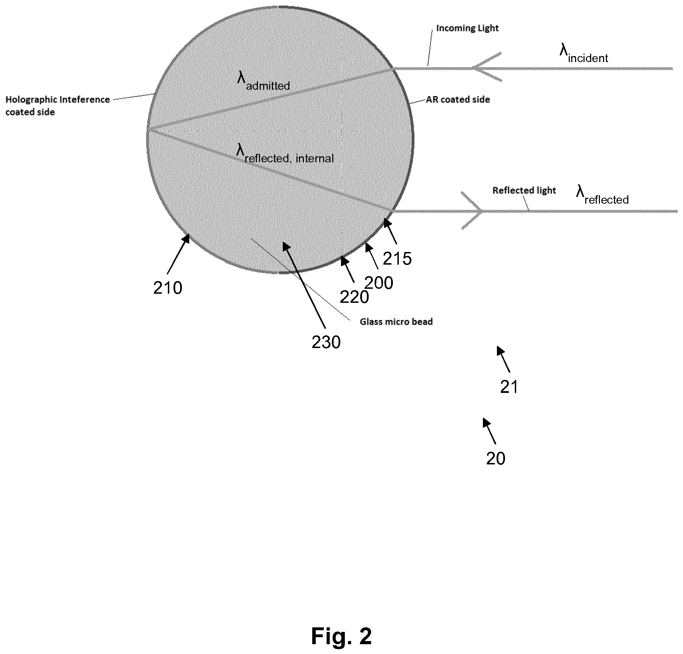

Figure 2 schematically depicts a coating material 20 according to an exemplary embodiment. The coating material 20 is similar to the coating material 10 and like features are denoted by like reference signs. However, in contrast to the coating material 10, a holographic interference coating 210 is provided on at least a first part of surfaces of particles 230 and an antireflective coating 215 is provided on at least a second part of the surfaces of the particles 230. Particularly, half of the surface of the particles 230 is covered by the holographic interference coating 210 and the other half of the surface of the particles 230 is covered by the antireflective coating 215. Coating one side with half of the surface of the particles 230 with the holographic interference coating 210 allows for greater reflection whilst ensuring that energy is allowed to exit the bead whilst the antireflective coating 215 on the front side allows for easier admittance of the electromagnetic radiation. Preferably, some or all of the particles 230 are oriented, for example electrostatically, whereby the antireflective coating 215 is outermost or generally outermost. In this way, retroreflection of at least some of the incident electromagnetic radiation, towards a source (e.g. a laser) thereof, is improved.

In this way, at least some incident electromagnetic radiation $\lambda_{incident}$ is transmitted into the bead 230, admitted therein by the antireflective coating 215 (i.e. enters the bead 230 as admitted electromagnetic radiation $\lambda_{admitted}$). At least some of the admitted electromagnetic radiation $\lambda_{admitted}$ transmitted into the bead 230 is subsequently transmitted out of the bead 230 (i.e. exits the bead as transmitted electromagnetic radiation $\lambda_{transmitted}$) (not shown). However, at least some of the electromagnetic radiation $\lambda_{admitted}$ transmitted into the bead 230 is trapped in the bead 230, due to the optical interference coating, for example the holographic interference coating 210. The trapped electromagnetic radiation $\lambda_{reflected,internal}$ may ablate at least a part of the optical interference coating 210, for example the holographic interference coating, and/or the bead 230, thereby absorbing energy of the trapped electromagnetic radiation and protecting the underlying article. However, reducing and/or minimizing an amount of the trapped electromagnetic radiation may be preferred such that retroflection (i.e. as reflected electromagnetic radiation $\lambda_{reflected}$) is enhanced and/or damage to the coating is reduced and/or life of the coating is extended. In other words, the bead 230 is sacrificial, being at least partly damaged by the incident electromagnetic radiation, while protecting the article. By providing multiple layers of beads 230, for example, resistance to the incident electromagnetic radiation may be improved.

In use, the beads 230 are applied to an article such that a surface of the article is covered in many layers of the beads 230, thereby providing a protective layer. This allows for the destruction and ablation of the protective layer by a laser from a weapon without breach of protection. Protection may be required only for a limited time due to a nature of the weapon only being able to target the article for a specific time. The holographic interference coating 210 may be tuned for a predetermined wavelength or a range of predetermined wavelengths. Since lasers from weapons are generally monochromatic, protection may be thus provided against predetermined weapons.

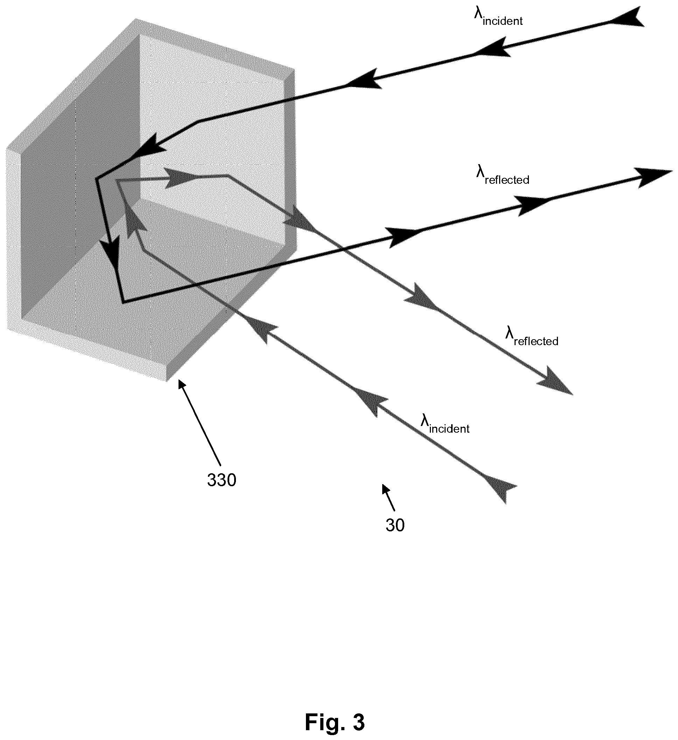

Figure 3 schematically depicts a coating material 30 according to an exemplary embodiment.

In this example, a holographic interference coating 330 includes corner reflectors and is applied to a surface of an article.

Using a corner reflector arrangement, this variation would allow for reflection to occur as the internal surfaces would be made from highly polished metal (such as steel) with the HIC applied to the surface. This would allow for the metallic structure to be cooled using traditional cooling methods such as phase changing, radiators etc. If the laser ablates the HIC the underlying structure provides additional protection. It is envisaged that many small structures will be placed along the asset to be protected to provide full coverage.

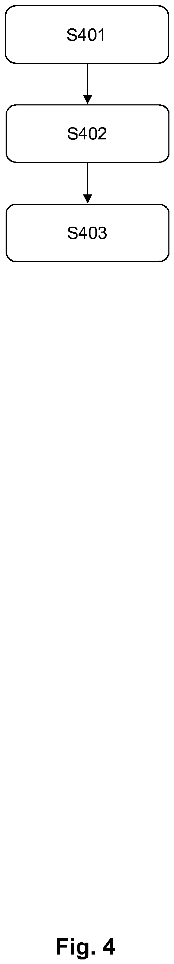

Figure 4 schematically depicts a method of providing a coating material according to an exemplary embodiment.

At S401, a layer of a polymeric composition comprising a polymer is applied on a particle.

At S402, the particle is floated on a liquid, preferably mercury.

At S403, the particle is irradiated with a laser beam, thereby providing an optical interference coating on the particle.

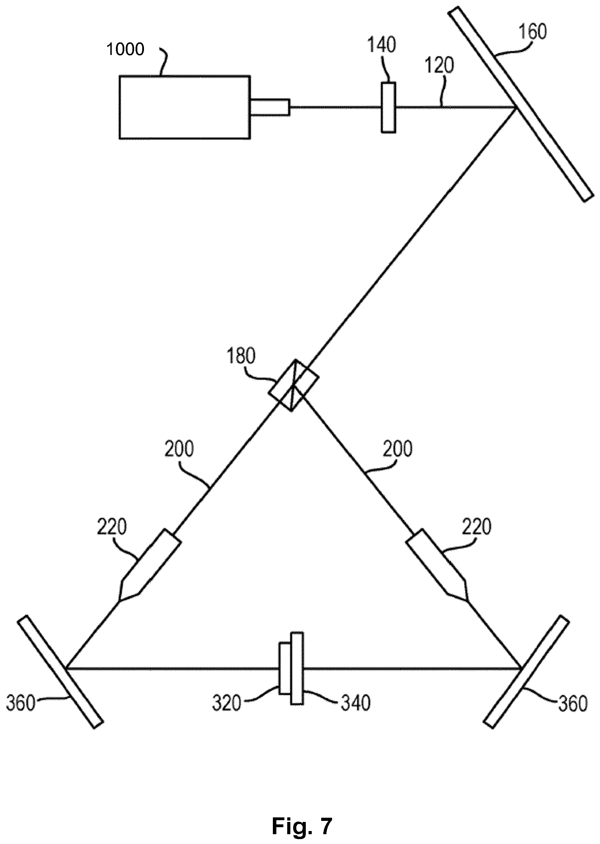

The method may include any of the steps described herein. Particularly, the method may include any of the steps described with reference to Figure 7.

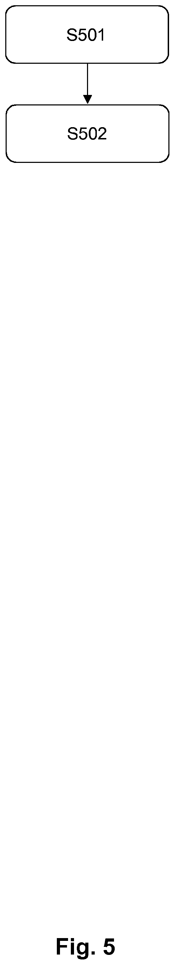

Figure 5 schematically depicts a method of providing a coating material according to an exemplary embodiment.

At S501, a film having an optical interference coating thereon on a surface thereof is provided.

At S502, the film is indented, thereby providing protrusions and/or depressions therein, for example a metamaterial.

The method may include any of the steps described herein.

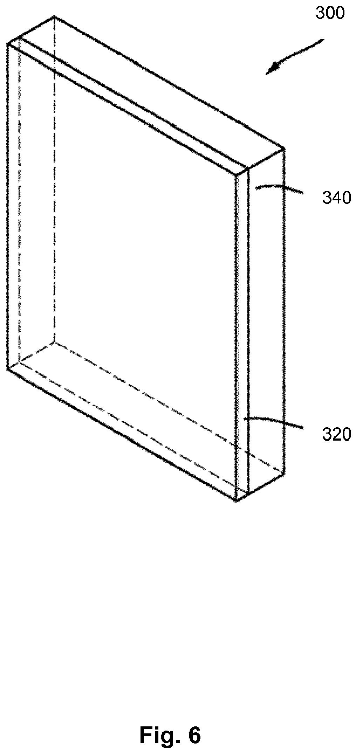

Figure 6 schematically depicts the filter assembly 300 for the coating material 10, 20 according to an exemplary embodiment.

A first notch filter 320 is provided as a layer applied to a first face of a substrate 340 to provide the filter assembly 300 adapted for mitigating laser threats such as dazzle. The substrate 340 is substantially transmissive of visible light (for example it may have a visible light transmission (VLT%) of around 90% of normally incident light) and may be formed for example from a glass or a plastics material such as polycarbonate.

The first notch filter 320 is an interference filter formed by holographically exposing a photosensitive film with a plurality of lasers having a set of predetermined wavelengths within a selected wavelength band of bandwidth 10 nm or less.

Conformable photosensitive (e.g. polymeric) films for use in exemplary embodiments of the present invention will be known to a person skilled in the art, and the present invention is not necessarily intended to be limited in this regard. Such photosensitive polymeric films are provided having varying degrees of inherent visible light transmission (VLT), ranging from less than 70% (and possibly, therefore, having a coloured tinge) up to 99% or more (and being substantially colourless and transparent). In respect of the present invention, suffice it to say that a photosensitive flexible/conformable (e.g. polymeric) film is selected having an inherent VLT of, for example, at least 85%. The film typically has a thickness of 1 to 100 micrometers. Thinner, currently known, films may not achieve useful optical densities. Indeed, in respect of currently known photosensitive polymeric films, the degree to which a selected radiation wavelength can be blocked (i.e. the effectiveness of a filter region formed therein) is determined by the thickness and refractive modulation index of the film and, also, by the optical design. Thus, the filter region thickness is ideally matched to the application and the potential power of the source from which protection is required (which may be dictated, at least to some extent, by the minimum distance from the target platform the laser threat may realistically be located and this, in turn, is dictated by application). In general, thicker films and films with higher refractive modulation indices would be selected if it were required to provide protection from higher power radiation sources or to provide greater angular coverage, but this might then have a detrimental effect on the inherent VLT of the film, so a balance is selected to meet the needs of a specific application.

Thus, once the film has been selected, the required holographic exposure thereof is effected to form the filter regions of a required notch filter region to be provided thereon, as described below with reference to Figure 7.

Figure 7 schematically depicts a method of providing the filter assembly 300 for the coating material 10, 20 according to an exemplary embodiment.

Particularly, as shown in Figure 7, distinct filter regions defining a notch filter region of a predetermined bandwidth (for example 5 - 10 nm) may be formed by exposing the film to the intersection of two counter propagating laser beams for each of a set of laser wavelengths within the selected wavelength band having a selected spectral bandwidth. Each laser 1000 (of a wavelength within the selected spectral bandwidth) produces a laser beam 120 which is controlled by a shutter 140. The laser beam 120 is directed by a mirror 160 into a beam splitter 180 wherein the beam is divided into equal beam segments 200. Each beam segment 200 passes through a microscope objective 220 and is then reflected by a respective mirror 360 onto a photosensitive polymer film 320 provided on the substrate 340. Other coating materials (not shown) may be provided between the microscope objective 220 and the mirror 360 to, for example, focus or diverge the respective beam segments 200, as required. Furthermore, masking or other limiting techniques may be utilised to limit the extent or thickness to which the film is exposed to the beam segments 200, as will be understood by a person skilled in the art. As a specific (non limiting) example, if it is required to provide a notch filter region of bandwidth 5 nm around 520 nm, then a plurality of lasers 1000 may be used to produce the notch filter region of (purely by way of example) 517.5 nm, 518 nm, 518.5 nm, 519 nm, 519.5 nm, 520 nm, 520.5 nm, 521 nm, 521.5 nm, 522 nm and 522.5 nm. The above-described exposure process may be performed consecutively for each of these laser wavelengths or, in other exemplary embodiments, the exposures may be performed substantially simultaneously. Other apparatus for forming a holographic filter region at each specified wavelength is known and could, alternatively, be used.

Once the exposure process has been completed, the resultant hologram can be fixed by, for example, a bleaching process.

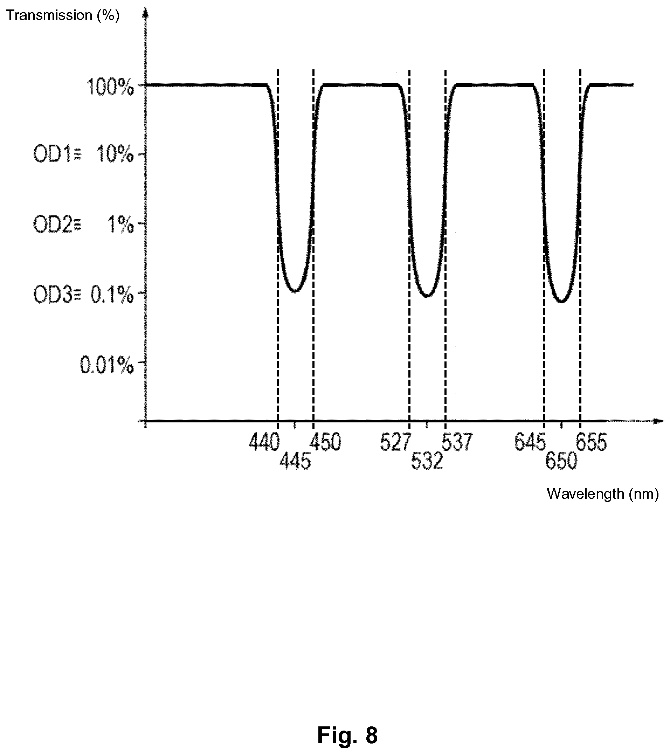

Figure 8 schematically depicts transmission characteristics of the filter assembly 300 for the coating material 10, 20 according to an exemplary embodiment.

Particularly, Figure 8 shows the transmission characteristics (which may alternatively be referred to as the transfer function) of visible electromagnetic radiation incident on the first notch filter 320. The transmission intensity relative to incident radiation intensity is shown on the y-axis and the wavelength of the incident radiation is shown on the x-axis.

As can be seen on the plot, across the range of wavelengths the intensity of the transmitted radiation is close to 100% of that which is incident. In general, a VLT% of 90% would be acceptable if 100% were not feasible. If the coating material is for coating an opaque article, for example, such as a part of a military article as described above, a lower VLT is acceptable, for example a VLT% of at most 50%, at most 40%, at most 30 %, at most 20%, at most 10%, at most 5%, at most 1 % or 0%.

There are three distinct notches in the transmission characteristic associated with three wavelength bands. These are in particular a 10 nm band centred on 455 nm, a 10 nm band centred on 532 nm and a 10 nm band centred on 650 nm. In general any three notches from the group consisting of 405 nm, 455 nm, 520 nm, 532 nm, and 650 nm may be selected. Further, notches may be chosen to coincide with any expected laser threat wavelength and/or expected red shift to compensate for blue shift due to the angle of inclination. Still further, the bandwidth may be 5 nm.

At the centre of each of these bands, the intensity of the transmitted radiation is at a minimum and has an optical density of approximately 3, which is equivalent to 0.1 % of the initially incident radiation.

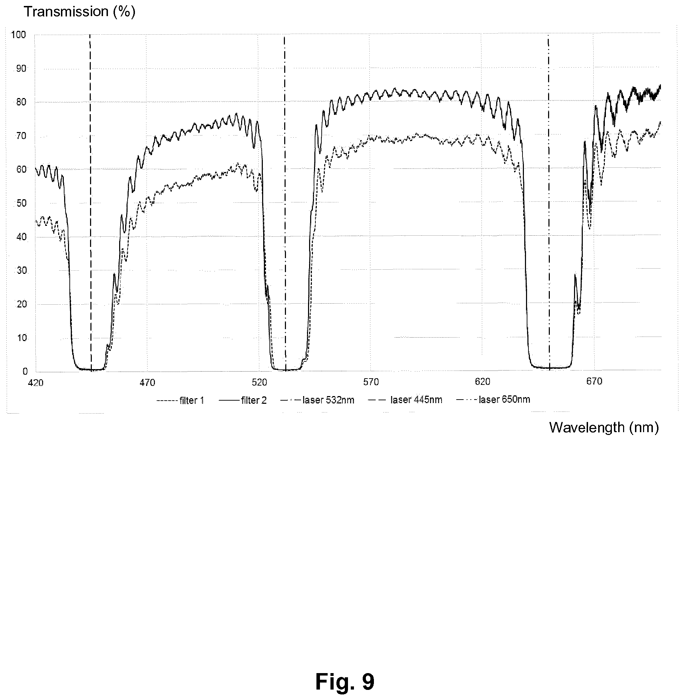

Figure 9 schematically depicts transmission characteristics of a filter assembly for an coating material according to an exemplary embodiment.

Particularly, Figure 9 shows the measured transmission characteristics of visible electromagnetic radiation incident on the first notch filter 320. The transmission intensity relative to incident radiation intensity is shown on the y-axis and the wavelength of the incident radiation is shown on the x-axis, as described with reference to Figure 8.

Although a preferred embodiment has been shown and described, it will be appreciated by those skilled in the art that various changes and modifications might be made without departing from the scope of the invention, as defined in the appended claims and as described above.

In summary, the invention provides a coating material for coating an article, the coating material comprising a surface having an optical interference coating thereon. In this way, in use, the coating material improves protection of the article, coated with the coating material, from incident electromagnetic radiation, particularly incident infra red electromagnetic radiation, having a predetermined wavelength, for example by attenuating the incident electromagnetic radiation having the predetermined wavelength incident on the article c.f. incident on the coating material. In this way, the coating material blocks and/or disrupts incident laser energy, for example. That is, the coating material reduces damage of the article due to the incident electromagnetic radiation, thereby maintaining operation, preserving integrity and/or preventing destruction thereof, thereby increasing resistance to hostile threats. In other words, the coating material wavelength-selectively reduces energy absorbed by the article, thereby extending life of the article. In addition, the coating material may retroreflect at least some of the incident electromagnetic radiation, for example towards a source (e.g. a laser) thereof, thereby potentially compromising, such as damaging, the source, which may comprise a weapon and/or a sensor. An article having a coating provided by such a coating material and methods of providing such coating materials are also provided by the invention.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims and drawings), and/or all of the steps of any method or process so disclosed, may be combined in any combination, except combinations where at most some of such features and/or steps are mutually exclusive.

Each feature disclosed in this specification (including any accompanying claims, and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims and drawings), or to any novel one, or any novel combination, of the steps of any method or process so disclosed.

**Claims**

1. A coating material for coating an article, the coating material comprising a surface having an optical interference coating thereon.

2. The coating material according to claim 1, wherein the coating material comprises a film comprising the surface having the optical interference coating thereon.

3. The coating material according to claim 2, wherein the film comprises a metamaterial.

4. The coating material according to any previous claim, wherein the surface comprises protrusions, for example columns, and/or depressions, for example cube corners.

5. The coating material according to claim 1, comprising a flowable formulation including the surface having the optical interference coating thereon.

6. The coating material according to claim 5, wherein the coating material comprises particles and wherein the surface having the optical interference coating thereon is provided by at least a first part of surfaces of the particles.

7. The coating material according to claim 6, wherein an antireflective coating is provided on at least a second part of the surfaces of the particles, wherein optionally the particles are oriented whereby the antireflective coating is outermost or generally outermost.

8. The coating material according to claim 6 or claim 7, wherein the particles are beads.

9. The coating material according to claim 6 or claim 7, wherein the particles include fibres.

10. The coating material according to claim 9, wherein the particles include chopped fibres.

11. The coating material according to claim 9, wherein the particles include ground fibres.

12. The coating material according to claim 6 or claim 7, wherein the particles are flakes, platelets or chopped film.

13. An article having a coating provided by a coating material according any of claims 1 to 12.

14. A method of providing a coating material, comprising:

> applying a layer of a polymeric composition comprising a polymer on a particle;
> floating the particle on a liquid, preferably mercury; and
> irradiating the particle with a laser beam, thereby providing an optical interference coating on the particle.

15. A method of providing a coating material, comprising:

> providing a film having an optical interference coating thereon on a surface thereof; and
> indenting the film, thereby providing protrusions and/or depressions therein, for example a metamaterial.

$\lambda_{\text{reflected, external}}$

Reflected light

Holographic inteference coating

Incoming light $\lambda_{\text{incident}}$

$\lambda_{\text{admitted}}$

$\lambda_{\text{reflected, internal}}$

reflected light $\lambda_{\text{reflected}}$

110

100

120

130

11

10

Fig. 1

Incoming Light

$\lambda_{incident}$

$\lambda_{admitted}$

Holographic inteference
coated side

AR coated side

$\lambda_{reflected, internal}$

Reflected light   $\lambda_{reflected}$

215

210

200

220

Glass micro bead

230

21

20

Fig. 2

$\lambda_{\text{incident}}$

$\lambda_{\text{reflected}}$

$\lambda_{\text{reflected}}$

$\lambda_{\text{incident}}$

330

30

**Fig. 3**

Fig. 4

**Fig. 5**

300

340

320

**Fig. 6**

**Fig. 7**

**Fig. 8**

**Fig. 9**

Europäisches Patentamt

European Patent Office

Office européen des brevets

## EUROPEAN SEARCH REPORT

Application Number

EP 18 27 5114

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 548 656 A (BAE SYSTEMS PLC [GB]) 27 September 2017 (2017-09-27) * page 7, lines 6-12; figure 4 * ----- | 1-3,13 | INV. G02B1/00 G02B5/20 G02B5/26 G02B5/28 |
| X | GB 2 552 551 A (METAMATERIAL TECH INC [CA]) 31 January 2018 (2018-01-31) * figure 2 * ----- | 1-3,13 | |

TECHNICAL FIELDS SEARCHED (IPC)

G02B

~~The present search report has been drawn up for all claims~~

| Place of search | Date of completion of the search | Examiner |
|---|---|---|
| Munich | 4 February 2019 | Mollenhauer, Ralf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................
& : member of the same patent family, corresponding document

EPO FORM 1503 03.82 (P04C01)

Europäisches
Patentamt

European
Patent Office

Office européen
des brevets

Application Number

EP 18 27 5114

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-3(completely); 13(partially)

☐ The present supplementary European search report has been drawn up for those parts of the European patent application which relate to the invention first mentioned in the claims (Rule 164 (1) EPC).

**Europäisches Patentamt**
**European Patent Office**
**Office européen des brevets**

**LACK OF UNITY OF INVENTION**
**SHEET B**

Application Number

EP 18 27 5114

The Search Division considers that the present European patent application does not comply with the requirements of unity of invention and relates to several inventions or groups of inventions, namely:

```
1. claims: 1-3(completely); 13(partially)

      coating material comprising a film and an optical
      interference coating thereon, the unknown optical properties
      being further defined by the film
                             ---

2. claims: 4, 15(completely); 13(partially)

      coating material comprising protrusions and/or depressions,
      and an optical interference coating thereon, the unknown
      optical properties being further defined by the protrusions
      and/or depressions
                             ---

3. claims: 5-12, 14(completely); 13(partially)

      coating material comprising a flowable formulation and an
      optical interference coating on one surface thereon, the
      unknown optical properties being further defined by the
      flowable formulation
                             ---
```

## ANNEX TO THE EUROPEAN SEARCH REPORT
## ON EUROPEAN PATENT APPLICATION NO.

EP 18 27 5114

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2019

| Patent document cited in search report | | Publication date | Patent family member(s) | | Publication date |
|---|---|---|---|---|---|
| GB 2548656 | A | 27-09-2017 | EP | 3433646 A1 | 30-01-2019 |
| | | | EP | 3433647 A1 | 30-01-2019 |
| | | | EP | 3433648 A1 | 30-01-2019 |
| | | | GB | 2548655 A | 27-09-2017 |
| | | | GB | 2548656 A | 27-09-2017 |
| | | | GB | 2548657 A | 27-09-2017 |
| | | | GB | 2548660 A | 27-09-2017 |
| | | | US | 2019101675 A1 | 04-04-2019 |
| | | | US | 2019107656 A1 | 11-04-2019 |
| | | | US | 2019129077 A1 | 02-05-2019 |
| | | | WO | 2017163027 A1 | 28-09-2017 |
| | | | WO | 2017163031 A1 | 28-09-2017 |
| | | | WO | 2017163033 A1 | 28-09-2017 |
| | | | WO | 2017163058 A1 | 28-09-2017 |
| | | | WO | 2017163060 A1 | 28-09-2017 |
| GB 2552551 | A | 31-01-2018 | CA | 3031932 A1 | 01-02-2018 |
| | | | EP | 3430449 A2 | 23-01-2019 |
| | | | GB | 2552551 A | 31-01-2018 |
| | | | US | 2018031749 A1 | 01-02-2018 |
| | | | WO | 2018022466 A2 | 01-02-2018 |

EPO FORM P0459

For more details about this annex : see Official Journal of the European Patent Office, No. 12/82